# EUROPÄISCHE PATENTSCHRIFT

(11) **EP 3 063 047 B1**
(45) Veröffentlichungstag und Bekanntmachung des Hinweises auf die Patenterteilung: **09.01.2019**
(21) Anmeldenummer: 14795585.0
(22) Anmeldetag: 28.10.2014
(51) Int. Cl.: B60W 30/18, F01N 3/00, B60W 50/00

(54) **VERFAHREN ZUR ERKENNUNG EINER WASSERDURCHFAHRT MITTELS ABSTANDSSENSOREN**
METHOD FOR RECOGNIZING A WATER PASSAGE BY MEANS OF DISTANCE SENSORS
PROCÉDÉ POUR LA DÉTECTION D'UN PASSAGE DANS UNE NAPPE D'EAU UTILISANT DES CAPTEURS DE DISTANCE

(30) Priorität: 30.10.2013 DE 102013222022
(43) Veröffentlichungstag der Anmeldung: 07.09.2016
(73) Patentinhaber: Robert Bosch GmbH, 70442 Stuttgart (DE)
(72) Erfinder: DI MIRO, Ariel, 70327 Stuttgart (DE); TIEFENBACH, Andy, 71665 Vaihingen-Horrheim (DE); BECKER, Markus, 71732 Tamm (DE)
(86) Internationale Anmeldenummer: PCT/EP2014/073084
(87) Internationale Veröffentlichungsnummer: WO 2015/063066

(56) Entgegenhaltungen:
- WO-A1-2012/080440
- WO-A1-2012/123555
- WO-A1-2013/135717

## Beschreibung

### Stand der Technik

Die Erfindung betrifft ein Verfahren zum Erkennen einer Wasserdurchfahrt oder eines hohen Wasserstandes für ein Fahrzeug, welches zu seinem Antrieb eine Brennkraftmaschine mit einem Abgasstrang aufweist, in dem mit mindestens einem Abgassensor die Funktionalität einer Abgasreinigungsanlage überwacht oder gesteuert wird, und der Abgassensor zumindest zeitweise mit hohen Temperaturen betrieben wird und bauartbedingt eine Thermoschockempfindlichkeit aufweist.

Abgassensoren, wie z.B. Lambdasonden, Partikelsensoren oder Stickoxidsensoren, nach dem Stand der Technik basieren auf keramischen Sensorelementen, welche im Betrieb zumindest zeitweise beheizt werden.

Partikelsensoren (PM) werden heute beispielsweise zur Überwachung des Rußausstoßes von Brennkraftmaschinen und zur On Bord Diagnose (OBD), beispielsweise zur Funktionsüberwachung von Partikelfiltern, z.B. eines Dieselpartikelfilters (DPF) eingesetzt. Ein solcher resistiver Partikelsensor ist in der DE 101 33 384 A1 beschrieben. Der Partikelsensor ist aus zwei ineinander greifenden, kammartigen Elektroden aufgebaut, die zumindest teilweise von einer Fanghülse überdeckt sind. Lagern sich Partikel aus einem Gasstrom an dem Partikelsensor ab, so führt dies zu einer auswertbaren Änderung der Impedanz des Partikelsensors, aus der auf die Menge angelagerter Partikel und somit auf die Menge im Abgas mitgeführter Partikel geschlossen werden kann.

Ist der Partikelsensor voll beladen, werden die angelagerten Partikel in einer Regenerationsphase mit Hilfe eines in dem Partikelsensor integrierten Heizelements verbrannt. Dafür wird die Keramik des Sensorelements auf hohe Temperaturen, üblicherweise auf > 600° C, erhitzt. In dieser Regenerationsphase reagiert das Sensorelement empfindlich auf große lokale Temperaturänderungen bzw. auf einen Thermoschock, wie er durch auftreffendes Wasser oder Wassertropfen auftreten kann. Ein derartiger Thermoschock kann zu Rissen im Sensorelement führen. Deshalb wird vom Motorsteuergerät eine Sensorregeneration nur dann angefordert, wenn laut Wärmemengenberechnung im Motorsteuergerät kein Wasser mehr an der Sensoreinbauposition vorhanden sein kann.

Weiterhin muss verhindert werden, dass während die Temperatur des Sensorelements derartiger Abgassensoren größer als eine bestimmte Schwellwerttemperatur ist, typischerweise ca. 200° C, eine Beaufschlagung mit Wasser auftritt. Deshalb erfolgt der Betrieb mit einer Beheizung mit einer Temperatur > 200° C der Abgassensoren, insbesondere nach einem Kaltstart, solange sich noch Kondensat im Abgasstrang einer Brennkraftmaschine befinden kann, erst nach einer bestimmten Zeit, in der man davon ausgehen kann, dass in dieser Zeit alles Wasser entweder verdampft ist oder in Form von Tröpfchen aus dem Abgasstrang durch Gasstöße im Fahrbetrieb ausgetragen wurde. Dieser Zeitpunkt wird typischerweise als Taupunktende (TPE) bezeichnet und hängt von vielen Bedingungen ab, weshalb dieser applikativ für jeden Fahrzeugtyp bestimmt werden muss. Der Betrieb der Abgassensoren bei Temperaturen > 200° C ist dann erlaubt, solange keine Kondensation von Wasser im Abgasstrang im Bereich der Sensoreinbaustelle infolge einer Abkühlung erfolgt.

Durch starke Beaufschlagung der Abgasanlage mit Wasser von außen, z.B. während einer Watfahrt oder beim zu Wasser lassen eines Bootes an einer Slip-Rampe kann Wasser in die Abgasanlage eindringen, wodurch es zu einer starken Abkühlung der Abgasanlage kommen kann. Diese Abkühlung kann je nach Abgasanlagenkonfiguration nicht vom Motorsteuergerät erkannt werden, aber zu einer Gefährdung durch Thermoschock am Sensorelement der Abgassensoren führen. Dieser Fall ist bisher in der Datierung des Taupunktendes nicht abgedeckt, da die bisherigen Abgassensoren typischerweise überwiegend motornah im Abgasstrang der Brennkraftmaschine verbaut sind und daher ein Wasserkontakt bei einer Watfahrt sehr unwahrscheinlich war. Durch den Einsatz neuerer Abgassensoren, wie insbesondere Partikel- oder Stickoxidsensoren, die systembedingt weit hinten im Abgasstrang platziert sind, ist es notwendig, die Funktionalität der Taupunktende-Bestimmung zu erweitern. Dazu muss eine Watfahrt erkannt werden, wie dies bisher nicht möglich ist.

Weiterhin ist es wichtig, eine Watfahrt frühzeitig zu erkennen, um Zeit zu haben, geeignete Maßnahmen zu ergreifen, den Sensor zu schützen. Die zu schützende Sensorelemente können bei Temperaturen bis über 800° C betrieben werden, so dass eine Abkühlung unter 300° C mehrere Sekunden bis Minuten betragen kann.

In der WO 2012/080439 A1 wird ein System zur Indikation von Waten eines Fahrzeugs welches einen Emitter/Empfänger-Sensor mit einer schwingenden Membran und einer Kontrolleinheit umfasst, wobei der Sensor als Ultraschall-Sensor ausgebildet ist, beschrieben. Weiterhin wird ein Verfahren zur Erkennung von Wasser mit diesem Sensor beschrieben. Dieser Sensor kann zusätzlich als Abstandssensor oder Parksensor verwendet werden. Das System kann zudem einen Sensor zur Bestimmung der Wassertiefe umfassen. Das Einleiten von Schutzmaßnahmen zum Schutze der Abgasreinigungsanlage bzw. der darin verbauten Abgassensoren bei Erreichen kritischer Wasserstände wird allerdings nicht offenbart. Die WO 2013/135717 zeigt ein Verfahren gemäss dem Oberbegriff des Anspruchs 1.

Es ist daher Aufgabe der Erfindung, frühzeitig eine Watfahrt bzw. eine Wasserdurchfahrt, welche mit einer raschen Kühlung des Abgastraktes durch umgebendes Wasser insbesondere hinter einem Partikelfilter verbunden ist, voraus zusehen, damit daraufhin vorausschauende Maßnahmen eingeleitet werden können, um die eingangs erwähnten keramikbasierten Abgassensoren in diesem Bereich vor einem Thermoschock zu schützen.

Es ist weiterhin Aufgabe der Erfindung, eine zur Durchführung des Verfahrens entsprechende Vorrichtung, insbesondere eine Steuer- und Auswerteeinheit, bereitzustellen.

### Offenbarung der Erfindung

Die das Verfahren betreffende Aufgabe wird dadurch gelöst, dass ein Waterkennungskriterium auf Basis von einem oder mehreren Abstandssensoren bestimmt und bei prognostizierten oder schon erreichten kritischen Werten des Wasserstandes Schutzmaßnahmen für die Abgasreinigungsanlage des Fahrzeugs oder für den oder die im Abgaskanal angeordneten Abgassensoren eingeleitet werden. Damit können Schäden an Abgassensoren oder an Komponenten der Abgasreinigungsanlage, die üblicherweise hohe Betriebstemperaturen (> 300° C) aufweisen, infolge der starken Abkühlung bei Wasserkontakt minimiert werden, da ein vermeintlich längerer Wasserkontakt mit dem Verfahren rechtzeitig prognostiziert werden kann. Zudem werden durch diese vorausschauenden Schutzmaßnahmen auch Fehlinformationen der Abgassensoren infolge eines Thermoschocks und einer möglicherweise einhergehenden Fehlfunktion frühzeitig erkannt und können entsprechend unterdrückt werden. Zudem ist auch eine Unterscheidung hinsichtlich einer Abkühlung durch kalte Abgasstöße möglich.

In einer bevorzugten Verfahrensvariante werden mit den Abstandssensoren, welche am Fahrzeug im vorderen Bereich angeordnet und im Wesentlichen noch vorne in Fahrtrichtung des Fahrzeugs ausgerichtet sind, vorausschauend Wasserstände detektiert, die kritische Werte annehmen können. Besonders vorteilhaft ist hierbei, dass sehr frühzeitig eine Watfahrt erkannt werden kann und somit mehr Zeit für Systemmaßnahmen bleibt, die insbesondere die Abkühlung der Sensorelemente der Abgassensoren auf unkritische Temperaturen, typischerweise auf < 300° C, erlaubt, da thermische Vorgänge langsamer ablaufen.

In einer weiteren bevorzugten Verfahrensvariante kann vorgesehen sein, dass mit den Abstandssensoren, welche am Fahrzeug im hinteren Bereich des Fahrzeugs angeordnet sind und nach unten oder nach hinten ausgerichtet sind, Wasserstände bestimmt werden, die kritische Werte annehmen können. Damit kann beispielsweise beim Zurücksetzen des Fahrzeugs, z.B. bei einem Slip-Vorgang, d.h. das zu Wasserlassen eines Bootstrailers auf einer Bootsentladerampe, der Wasserstand detektiert und rechtzeitig entsprechende Schutzmaßnahmen für die Abgassensoren und/ oder andere empfindliche Komponenten im Abgastrakt der Brennkraftmaschine, z.B. ein Partikelfilter oder Katalysator, eingeleitet werden. Zudem kann dem Fahrer angezeigt werden, wie steil die Rampe ist bzw. welche Wassertiefe zu erwarten ist. Vorzugsweise ist der oder die Abstandssensoren in der Nähe der relevanten Abgassensoren oder Komponenten der Abgasreinigungsanlage verbaut.

Hinsichtlich eines niedrigen und damit kostengünstigen applikativen Aufwandes ist es von Vorteil, wenn Abstandssensoren und/ oder Auswertevorrichtungen verwendet werden, die ansonsten für ein Abstandswarnsystem und/ oder ein Einparkhilfesystem im Fahrzeug verwendet werden.

Hinsichtlich ihrer Zuverlässigkeit und der Kosten hat sich als vorteilhaft herausgestellt, wenn übliche Abstandssensoren verwendet werden, die ultraschall- oder radarbasiert arbeiten. Diese werden in heutigen Parkhilfe und Abstandswarnsystemen bereits in großen Stückzahlen verbaut und sind entsprechend robust und preiswert.

Erfindungsgemäss ist vorgesehen, dass als Schutzmaßnahme ein Abschalten oder Herunterregeln einer Sensorheizung des Abgassensors oder innermotorische Maßnahmen zur Temperaturabsenkung im Abgastrakt der Brennkraftmaschine eingeleitet werden. Damit kann eine rasche Abkühlung auf unkritische Temperaturwerte erreicht werden.

Das erfindungsgemäße Verfahren, wie es zuvor in seinen Varianten beschrieben wurde, bietet besondere Vorteile für Abgassensoren, wie Lambdasonden, Partikelsensoren und/ oder Stickoxidsensoren. Diese weisen in der Regel einen keramischen Grundkörper auf, auf dem oder in dem entsprechende Sensorstrukturen aufgebracht oder integriert sind. Dazu gehören z.B. auch Sensoren mit denen eine Kohlenwasserstoffkonzentration im Abgas gemessen werden kann. Weiterhin werden diese Sensoren ständig oder zumindest zeitweise, z.B. bei der Regeneration eines Partikelsensors, bei hohen Temperaturen, d.h. > 200° C, typischerweise bei 600 bis 800° C, betrieben und weisen daher eine Thermoschockempfindlichkeit auf, was bei rascher Abkühlung infolge massiven Wasserkontaktes zur Zerstörung und/ oder zu Fehlfunktionen führen kann.

Die die Vorrichtung betreffende Aufgabe wird dadurch gelöst, dass mittels einer Steuer- und Auswerteeinheit ein Waterkennungskriterium auf Basis von einem oder mehreren Abstandssensoren bestimmbar und bei prognostizierten oder schon erreichten kritischen Werten des Wasserstandes Schutzmaßnahmen für die Abgasreinigungsanlage des Fahrzeugs oder für den oder die im Abgaskanal angeordneten Abgassensoren einleitbar sind, wobei die Funktionalität der Waterkennung in einer Steuer- und Auswerteeinheit der Abstandssensoren für ein im Fahrzeug vorhandenes Parkhilfesystem und/ oder Abstandswarnsystem implementiert ist. Üblicherweise sind diese Steuer- und Auswerteeinheiten in heutigen Fahrzeugen serienmäßig oder gegen Aufpreis vorhanden, so dass nur ein geringer applikativer Aufwand erforderlich ist, mit den Auswerteergebnissen entsprechende Schutzmaßnahmen, wie zuvor beschrieben, einzuleiten. Die Funktionalität kann durch eine Softwareergänzung realisiert werden. Zusätzlich kann der Fahrer vorausschauend hinsichtlich zu erwartender kritischer Wasserstände oder beim Zurücksetzen, beispielsweise auf einer Bootsentladerampe, über die aktuelle Wasserstandshöhe mittels Anzeigen oder Warnleuchten im Cockpit informiert werden.

Die Erfindung wird im Folgenden anhand eines in den Figuren dargestellten Ausführungsbeispiels näher erläutert. Es zeigen:
Figur 1 in einer schematischen Darstellung ein Fahrzeug bei einer Wasserdurchfahrt bei hohem Wasserstand,
Figur 2 das Fahrzeug bei einer Wasserdurchfahrt bei niedrigem Wasserstand mit nach vorne gerichtetem Abstandssensor und
Figur 3 das Fahrzeug bei einer Wasserdurchfahrt bei niedrigem Wasserstand mit nach unten gerichtetem Abstandssensor.

Das erfindungsgemäße Verfahren greift auf vorhandene Sensorik und Auswertevorrichtungen zurück. Dabei handelt es sich um Sensoren auf Basis von Ultraschall- und/ oder Radar-Sensoren. Nachfolgend erfolgt eine Beschreibung eines ultraschallbasierten Systems, wobei prinzipiell das Verfahren auch auf radarbasierte Systeme übertragen werden kann, da die Funktion der Abstandsmessung ähnlich ist.

Ultraschallbasierte Messsysteme im Kraftfahrzeug werden eingesetzt, um eine Distanz zu einem vor einem Sensor befindlichen Objekt zu vermessen. Die eingesetzten Sensoren basieren in der Regel auf dem Puls-Echo-Verfahren. In diesem Betrieb sendet der Sensor einen Ultraschallimpuls aus und misst die durch ein Objekt hervorgerufene Reflexion des Ultraschallimpulses (Echo). Der Abstand zwischen Sensor und Objekt errechnet sich über die gemessene Echolaufzeit und die Schallgeschwindigkeit. Eine Reflexion des Ultraschallimpulses wird von sogenannten schallharten Materialien, wie z.B. Metall, verursacht. Auch der der Übergang von Luft zu Wasser ist als schallhart einzuordnen.

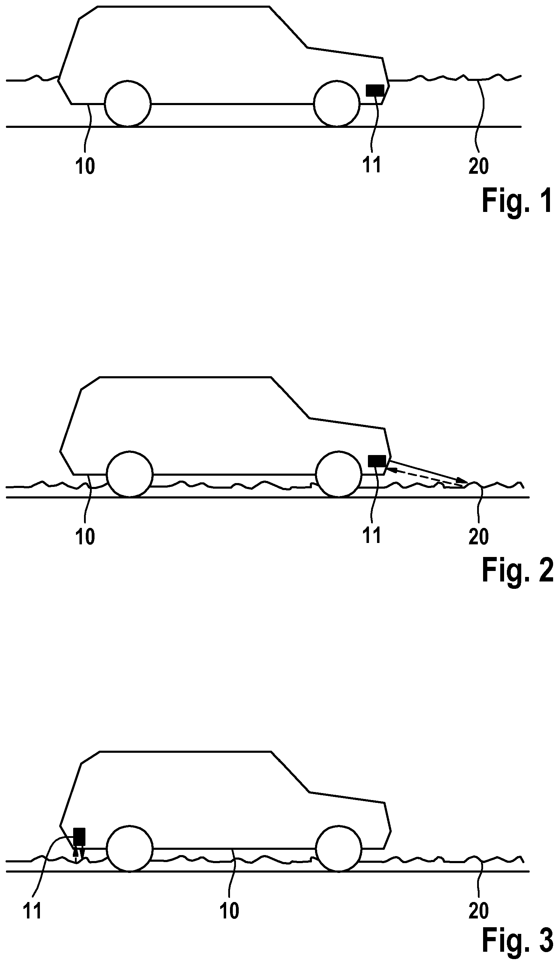

Figur 1 bis 3 zeigen jeweils in einer schematischen Darstellung ein Fahrzeug 10 bei einer Wasserdurchfahrt bzw. Watfahrt.

Figur 1 zeigt eine Situation, bei der die im Fahrzeug 10 vorhandene Abstandssensoren 11, z.B. als Parkhilfesysteme ausgelegt, exemplarisch horizontal nach vorn ausgerichtet sind. Eine eindeutige Reflexion geschieht in dieser Konfiguration vor allem bei voller Überflutung der Abstandssensoren 1, wie dies bei vergleichsweise hohem Wasserstand 20 auftritt. Andere Orientierungen der Abstandssensoren 11 können dabei auch nach hinten oder zur Seite ausgerichtet sein, wobei insbesondere ein Verbau in den Stoßstangen vorteilhaft ist.

In Figur 2 ist eine Situation dargestellt, in der das Fahrzeug 10 bei einer Wasserdurchfahrt bei niedrigem Wasserstand 20 gezeigt ist. Wird davon ausgegangen, dass die Wasseroberfläche eine gewisse Welligkeit aufweist, dann sind bei dem nach vorne ausgerichteten Abstandssensor 11 auch Reflexionen zu erwarten, wenn die Wasseroberfläche auf niedrigem Niveau liegt, wobei allerdings mit schwächeren Echos zu rechnen ist.

Besonders vorteilhaft ist eine Anbringung und Ausrichtung des Abstandsensors nach unten, wie dies in Figur 3 dargestellt ist. Bei dieser Konfiguration kann mittels der Abstandssensoren 11 der Abstand zum Wasser unter allen Bedingungen gemessen werden und somit der Wasserstand 20 bestimmt bzw. die Wassertiefe ermittelt werden. Vorzugsweise ist eine Anbringung in der Nähe der relevanten Abgassensoren, also im hinteren Fahrzeugbereich, z.B. unterhalb der hinteren Stoßstange. Somit kann auch eine sichere und frühzeitige Erkennung erfolgen, wenn das Fahrzeug 10 nur teilweise ins Wasser fährt, z.B. auf einer Bootsentladerampe.

Die Funktionalität der Waterkennung kann dabei als Softwaremodul in einer Steuer- und Auswerteeinheit der Abstandssensoren 11, z.B. im Parkhilfesystem oder Abstandswarnsystem, implementiert sein, wobei entsprechende Signale an eine Motorsteuerung der Brennkraftmaschine übermittelt werden, wenn eine Wasserdurchfahrt bzw. ein hoher Wasserstand detektiert wird, um entsprechende Schutzmaßnahmen für die im Abgasstrakt der Brennkraftmaschine verbauten Komponenten, insbesondere für die bei hoher Temperatur betriebenen Abgassensoren, einleiten zu können.

## Patentansprüche

1. Verfahren zum Erkennen einer Wasserdurchfahrt oder eines hohen Wasserstandes (20) für ein Fahrzeug (10), welches zu seinem Antrieb eine Brennkraftmaschine mit einem Abgasstrang aufweist, in dem mit mindestens einem Abgassensor die Funktionalität einer Abgasreinigungsanlage überwacht oder gesteuert wird, und der Abgassensor zumindest zeitweise mit hohen Temperaturen betrieben wird und bauartbedingt eine Thermoschockempfindlichkeit aufweist, **dadurch gekennzeichnet, dass** ein Waterkennungskriterium auf Basis von einem oder mehreren Abstandssensoren (11) bestimmt und bei prognostizierten oder schon erreichten kritischen Werten des Wasserstandes (20) Schutzmaßnahmen für die Abgasreinigungsanlage des Fahrzeugs oder für den oder die im Abgaskanal angeordneten Abgassensoren eingeleitet werden und dass als Schutzmaßnahme ein Abschalten oder Herunterregeln einer Sensorheizung des Abgassensors oder innermotorische Maßnahmen zur Temperaturabsenkung im Abgastrakt der Brennkraftmaschine eingeleitet werden.

2. Verfahren nach Anspruch 1, **dadurch gekennzeichnet, dass** mit den Abstandssensoren (11), welche am Fahrzeug (10) im vorderen Bereich angeordnet und im Wesentlichen noch vorne in Fahrtrichtung des Fahrzeugs (10) ausgerichtet sind, vorausschauend Wasserstände (20) detektiert werden, die kritische Werte annehmen können.

3. Verfahren nach Anspruch 1, **dadurch gekennzeichnet, dass** mit den Abstandssensoren (11), welche am Fahrzeug (10) im hinteren Bereich des Fahrzeugs (10) angeordnet sind und nach unten oder nach hinten entgegen der Fahrtrichtung des Fahrzeugs ausgerichtet sind, Wasserstände (20) bestimmt werden, die kritische Werte annehmen können.

4. Verfahren nach mindestens einem der Ansprüche 1 bis 3, **dadurch gekennzeichnet, dass** Abstandssensoren (11) und/ oder Auswertevorrichtungen verwendet werden, die ansonsten für ein Abstandswarnsystem und/ oder ein Einparkhilfesystem im Fahrzeug (10) verwendet werden.

5. Verfahren nach einem der Ansprüche 1 bis 4, **dadurch gekennzeichnet, dass** Abstandssensoren (11) verwendet werden, die ultraschall- oder radarbasiert arbeiten.

6. Verfahren nach einem der Ansprüche 1 bis 5, **dadurch gekennzeichnet, dass** als Abgassensoren Lambdasonden, Partikelsensoren, Stickoxidsensoren, und / oder andere Abgassensoren basierend auf einem keramischen Sensorelement verwendet werden.

7. Verfahren nach einem der Ansprüche 1 bis 6, **dadurch gekennzeichnet, dass** zusätzlich dem Fahrer vorausschauend hinsichtlich zu erwartender kritischer Wasserstände oder beim Zurücksetzen, beispielsweise auf einer Bootsentladerampe, über die aktuelle Wasserstandshöhe mittels Anzeigen oder Warnleuchten im Cockpit informiert wird.

## Claims

1. Method for recognizing a passage water through or a high water level (20) for a vehicle (10) which, for its drive, has an internal combustion engine with an exhaust train, in which the functionality of an exhaust purification system is monitored or controlled with at least one exhaust sensor, and the exhaust sensor is operated at high temperatures, at least at times, and, because of the design, exhibits thermal shock sensitivity, **characterized in that** a wading recognition criterion is determined on the basis of one or more distance sensors (11) and, at critical values of the water level (20) which are predicted or have already been reached, protective measures for the exhaust purification system of the vehicle or for the exhaust sensor(s) arranged in the exhaust duct are initiated, and **in that**, as a protective measure, switching off or reducing sensor heating of the exhaust sensor or engine-internal measures for lowering the temperature in the exhaust tract of the internal combustion engine are initiated.

2. Method according to Claim 1, **characterized in that** water levels (20) which can assume critical values are detected in an anticipatory manner by using the distance sensors (11) which are arranged on the vehicle (10) in the front region and are substantially oriented towards the front in the direction of travel of the vehicle (10).

3. Method according to Claim 1, **characterized in that** water levels (20) which can assume critical values are determined by using the distance sensors (11) which are arranged on the vehicle (10) in the rear region of the vehicle (10) and are oriented downwards or rearwards counter to the direction of travel of the vehicle.

4. Method according to at least one of Claims 1 to 3, **characterized in that** use is made of distance sensors (11) and/or evaluation devices which are otherwise used for a distance warning system and/or a parking aid system in the vehicle (10).

5. Method according to one of Claims 1 to 4, **characterized in that** use is made of distance sensors (11) which operate on the basis of ultrasound or radar.

6. Method according to one of Claims 1 to 5, **characterized in that** lambda probes, particle sensors, nitrogen oxide sensors and/or other exhaust sensors based on a ceramic sensor element are used as exhaust sensors.

7. Method according to one of Claims 1 to 6, **characterized in that** in addition, in an anticipatory manner with regard to critical water levels to be expected or when reversing, for example on a boat unloading ramp, the driver is informed about the current height of the water level by means of displays or warning lamps in the cockpit.

## Revendications

1. Procédé de détection d'un passage d'eau ou d'un niveau d'eau élevé (20) destiné à un véhicule (10) comprenant pour son entraînement un moteur à combustion interne équipé d'un système d'échappement dans lequel la fonctionnalité d'un système de nettoyage de gaz d'échappement est surveillée ou commandée au moyen d'au moins un capteur de gaz d'échappement, et dans lequel le capteur de gaz d'échappement est utilisé au moins temporairement à des températures élevées et présente par conception une sensibilité aux chocs thermiques, **caractérisé en ce qu'**un critère de reconnaissance de l'eau est déterminé sur la base d'au moins un capteur de distance (11) et, pour des valeurs critiques prédites ou déjà atteintes du niveau d'eau (20), des mesures de protection du système de nettoyage de gaz d'échappement du véhicule ou de l'au moins un capteur de gaz d'échappement disposé dans le conduit de gaz d'échappement sont prises et **en ce qu'**un arrêt ou un réglage à la baisse du chauffage du capteur de gaz d'échappement est effectué, ou des mesures internes au moteur pour abaisser la température dans le conduit de gaz d'échappement du moteur à combustion interne sont prises, comme mesure de protection.

2. Procédé selon la revendication 1, **caractérisé en ce que** des niveaux d'eau (20), qui peuvent prendre des valeurs critiques, sont détectés à l'avance avec les capteurs de distance (11) disposés au niveau du véhicule (10) dans la région avant et orientés sensiblement vers l'avant dans la direction de déplacement du véhicule (10).

3. Procédé selon la revendication 1, **caractérisé en ce que** des niveaux d'eau (20), qui peuvent prendre des valeurs critiques, sont déterminés avec les capteurs de distance (11) au niveau du véhicule (10) dans la région arrière du véhicule (10) et orientés vers le bas ou vers l'arrière à l'opposé de la direction de déplacement du véhicule.

4. Procédé selon l'une au moins des revendications 1 à 3, **caractérisé en ce que** des capteurs de distance (11) et/ou des dispositifs d'évaluation sont utilisés, lesquels servent par ailleurs à un système d'avertissement de distance et/ou un système d'aide au stationnement dans le véhicule (10).

5. Procédé selon l'une des revendications 1 à 4, **caractérisé en ce que** des capteurs de distance (11) sont utilisés, lesquels fonctionnent à base d'ultrasons ou de radar.

6. Procédé selon l'une des revendications 1 à 5, **caractérisé en ce que** des sondes lambda, des capteurs de particules, des capteurs d'oxyde d'azote et/ou d'autres capteurs de gaz d'échappement basés sur un élément de détection en céramique sont utilisés comme capteurs de gaz d'échappement.

7. Procédé selon l'une des revendications 1 à 6, **caractérisé en ce que** le conducteur est également informé à l'avance des niveaux d'eau critiques attendus ou, lors de la réinitialisation, par exemple sur un quai de déchargement de bateau, de la hauteur d'eau actuelle par affichage ou par témoins lumineux dans le cockpit.
